# EUROPÄISCHE PATENTANMELDUNG

(11) **EP 4 810 933 A1**
(43) Veröffentlichungstag der Anmeldung: **23.09.2026**
(21) Anmeldenummer: 25164759.0
(22) Anmeldetag: 19.03.2025
(51) Int. Cl.: G01M 13/021, G06T 7/00, H04N 23/63, G01M 11/08

(54) **VERFAHREN UND VORRICHTUNG ZUR TRAGBILD-DOKUMENTATION**

(71) Anmelder: Klingelnberg AG, 8050 Zürich (CH)
(72) Erfinder: Pahud, Christian, 8142 Uitikon (CH); von Ehrenberg, Martin, 5423 Freienwil (CH); Herzhoff, Stefan, 42499 Hückeswagen (DE)
(74) Vertreter: Janke Scholl Patentanwälte PartG mbB

(57) **Zusammenfassung**

Das erfindungsgemäße Verfahren umfasst ein Bereitstellen eines Zahnrads (2) mit einem Tragbild (8) und eine fotografische Dokumentation des Tragbilds (8), wobei eine in einem Display einer Kamera (18) dem Live-Bild überlagerte Referenzgrafik (24) zum handgeführten, wiederholgenauen Ausrichten der Kamera (18) verwendet wird.

## Beschreibung

Die vorliegende Erfindung betrifft ein Verfahren und eine Vorrichtung zur Tragbild-Dokumentation.

Zahnradpaarungen werden in der betrieblichen Praxis bezüglich ihres Tragbilds überprüft. Hierzu wird auf den Zahnflanken z.B. Tragbildlack oder Tuschierpaste aufgetragen, die das Tragbild nach dem Abwälzen sichtbar machen.

Die Dokumente DE 10 2015 204 554 B4, DE 10 2016 206 812 A1, DE 198 40 969 C2, US 5,610,994 und WO 2021/242549 beschreiben jeweils aufwändige und kostenintensive Prüfstände und Verfahren zur teil- oder vollautomatischen Dokumentation von Tragbildern von Zahnradpaarungen im Zahneingriff. Hierbei kommen insbesondere Prüfstände mit teuren Kamerasystemen zum Einsatz, die eine Tragbilddokumentation der Zahnradpaarungen unmittelbar im auf dem Prüfstand montierten Zustand ermöglichen.

Trotz der kostenintensiven Prüfstandstechnologie erfordern derartige Systeme meist lange Rüstzeiten, sofern der Prüfstand für eine neue Zahnradgeometrie eingerichtet werden soll bzw. im Prüfaufbau ein Wechsel auf eine andere Zahnradgeometrie erfolgt. Denn das Ausrichten und Einstellen der Kamerasysteme zur Tragbilderfassung erfordert insbesondere für Kegelradverzahnungen mit ihren häufig stark gekrümmten Flanken einen Bedienereingriff.

In vielen Fällen sind derartig aufwändige Lösungen zur Tragbilddokumentation in der betrieblichen Praxis nicht erforderlich oder nicht wirtschaftlich. So erfolgt in der betrieblichen Praxis zum Teil eine manuelle Tragbilddokumentation unter Verwendung von Klebestreifen, mit deren Hilfe ein Tragbild in Form von Tuschierpaste von einer Zahnflanke abgezogen wird. Diese Klebestreifen werden auf ein Protokoll geklebt, um das Tragbild zu dokumentieren.

Weiter ist es bekannt, fotografische Aufnahmen von Tragbildern mit einer handgeführten Fotokamera zu erstellen, wobei das Ergebnis dieser Dokumentation stark vom Bedienerverhalten abhängt. So unterscheiden sich die fotografischen Aufnahmen in Abhängigkeit vom Bediener bezüglich des Aufnahmeabstands, des Aufnahmewinkels und der Belichtung. Dies erschwert die Vergleichbarkeit und die Auswertbarkeit der in dieser Art dokumentierten Tragbilder.

Vor diesem Hintergrund liegt der vorliegenden Erfindung die technische Problemstellung zugrunde, ein verbessertes Verfahren und eine verbesserte Vorrichtung zur Tragbild-Dokumentation anzugeben, die insbesondere eine kostengünstige, flexibel einsetzbare und reproduzierbare Tragbild-Dokumentation ermöglichen.

Die voranstehend beschriebene, technische Problemstellung wird jeweils mit den Merkmalen der unabhängigen Ansprüche gelöst. Weitere Ausgestaltungen der Erfindung ergeben sich aus den abhängigen Ansprüchen und der nachstehenden Beschreibung.

Erfindungsgemäß wird ein Verfahren angegeben, mit den Verfahrensschritten: Bereitstellen eines Zahnrads, wobei auf Zahnflanken des Zahnrads eine Substanz zum Visualisieren eines Tragbilds vorhanden ist, wie Tragbildlack, Tuschierpaste oder dergleichen, und wobei die Substanz infolge eines Abwälzens des Zahnrads mit einem Gegenrad teilweise abgetragen und/oder verdrängt worden ist, so dass das Tragbild visualisiert ist; Fotografische Dokumentation des Tragbilds einer oder mehrerer Zahnflanken, durch Ausrichten eines handgeführten elektronischen Geräts, wie eines Smartphones, eines Tablets oder dergleichen, das eine Kamera und ein Display als elektronischen Sucher der Kamera aufweist, relativ zum jeweils zu dokumentierenden Tragbild, wobei während des Ausrichtens und vor einem Auslösen der Kamera einem mittels des Displays dargestellten Live-Sucherbilds der Kamera eine Referenzdarstellung zumindest eines Ausschnitts des Zahnrads überlagert wird, um ein wiederholgenaues, handgeführtes Ausrichten der Kamera relativ zum Zahnrad zu ermöglichen, und Auslösen der Kamera, um eine fotografische Aufnahme des Tragbilds zu erzeugen.

Das gegenständliche Verfahren ermöglicht eine wiederholgenaue, manuelle Tragbilderfassung mittels des handgeführten elektronischen Geräts, in dem die dem Live-Sucherbild überlagerte Referenzdarstellung eine manuelle Ausrichtung und Positionierung des handgeführten elektronischen Geräts relativ zum Zahnrad vereinfacht.

Der jeweilige Benutzer muss das handgeführte elektronische Gerät demnach lediglich derart ausrichten, dass das Live-Sucherbild möglichst deckungsgleich mit der dem Live-Sucherbild überlagerten Referenzdarstellung ist. So kann ein intuitives Positionieren und Orientieren des handgeführten elektronischen Geräts relativ zum Zahnrad erfolgen, ohne, dass ein jeweiliger Bediener besondere Kenntnisse zur Dokumentation und Auswertung von Tragbildern haben muss.

Der Bedienereinfluss auf die Dokumentation und Auswertung von Tragbildern kann somit reduziert werden, da Tragbilder durch verschiedene Bediener immer in gleicher, reproduzierbarer Weise, d.h. mit dergleichen Ausrichtung der Kamera und einem vergleichbaren Bildausschnitt, erfasst werden.

Weiter ist vorteilhaft, dass zur jeweiligen fotografischen Dokumentation des jeweiligen Tragbilds kostengünstig und in großen Mengen verfügbare, handgeführte elektronische Geräte verwendet werden können, wie Smartphones, Tablets oder dergleichen. In der betrieblichen Praxis haben eine Vielzahl von Personen Zugang z.B. zu Smartphones oder Tablets, so dass im Vergleich zu vorbekannten Lösungen keine teuren Kamerasysteme zur Tragbilddokumentation angeschafft werden müssen. Zudem sind die meisten Personen bereits aus dem privaten und betrieblichen Umfeld mit der Bedienung und dem Betriebssystem derartiger handgeführter elektronischer Geräte, wie Smartphones oder Tablets, vertraut, so dass keine Schulungen zur Verwendung dieser Geräte erforderlich sind. Aufgrund des geringen Gewichts und der breiten Verfügbarkeit der handgeführten elektronischen Geräte ist das gegenständliche Verfahren zudem schnell und flexibel einsetzbar - ohne, dass es eines großen Rüst- oder Einstellungsaufwands für die Dokumentation bedarf.

Erfindungsgemäß wird somit ein verbessertes Verfahren angegeben, das kostengünstig und flexibel einsetzbar ist und zudem eine reproduzierbare Tragbild-Dokumentation ermöglicht.

Die Referenzdarstellung kann z.B. eine teiltransparente Wiedergabe einer fotografischen Aufnahme eines baugleichen Zahnrads aufweisen. Demnach kann die Referenzdarstellung eine Bilddatei sein, die im Display angezeigt und dem Live-Sucherbild als teiltransparente Darstellung überlagert wird, um ein Ausrichten des handgeführten elektronischen Geräts relativ zum Zahnrad zu vereinfachen.

Der Grad der Transparenz der Referenzdarstellung kann einstellbar sein. Z.B. kann eine Transparenz von 50% als Ausgangsgröße gesetzt sein und der Grad der Transparenz kann ausgehend von dieser Ausgangsgröße erhöht oder reduziert werden. Denn je nach den herrschenden Lichtverhältnissen, d.h. insbesondere dem Lichteinfall auf das Display, kann es erforderlich sein, die Referenzdarstellung transparenter oder weniger transparent darzustellen, um sowohl die Referenzdarstellung als auch das Live-Sucherbild im Display erkennen und unterscheiden zu können.

Die Referenzdarstellung kann mindestens eine aus einer fotografischen Aufnahme eines baugleichen Zahnrads abgeleitete Referenzgrafik aufweisen, wie eine Kontur, ein Linienmodell, Eckpunkte oder dergleichen. Die Strichstärke und/oder die Farbe der Referenzgrafik können einstellbar sein.

Die Referenzdarstellung kann mindestens eine aus Soll-Daten des Zahnrads abgeleitete Referenzgrafik aufweisen, wie eine Kontur, ein Linienmodell, Eckpunkte oder dergleichen. Die Strichstärke und/oder die Farbe der Referenzgrafik können einstellbar sein.

Soweit die Referenzdarstellung eine aus einer fotografischen Aufnahme eines baugleichen Zahnrads abgeleitete Referenzgrafik aufweist, kann vorgesehen ein, dass diese Referenzgrafik manuell nachbearbeitet worden ist und/oder anhand von Soll-Daten des Zahnrads verifiziert und/oder verbessert worden ist. Dies kann dazu dienen, Artefakte oder fehlerhafte Bereiche der Referenzdarstellung zu korrigieren. Denn die metallischen, reflektierenden Oberflächen eines Zahnrads, die häufig keinen starken Kontrast zu angrenzenden Strukturen oder zum Hintergrund aufweisen, stellen eine besondere Herausforderung für softwaregestützte Anwendungen zur Kantenerkennung in Bilddateien dar.

Die Referenzdarstellung kann eine Kombination der vorgenannten Varianten aufweisen, so dass z.B. eine teiltransparente Darstellung einer fotografischen Aufnahme eines baugleichen Zahnrads zusammen mit einer gleichzeitig dargestellten Referenzgrafik als Referenzdarstellung dient.

Gemäß einer Ausgestaltung des Verfahrens kann vorgesehen sein, dass die fotografische Dokumentation mithilfe eines Softwareprogrammprodukts durchgeführt wird, das auf die Kamera und das Display zugreift, wobei das Softwareprogrammprodukt auf dem handgeführten elektronischen Gerät ausgeführt wird, oder webbasiert in einem Browser des handgeführten elektronischen Geräts aufgerufen wird.

Das Softwareprogrammprodukt kann dazu eingerichtet sein, auf eine Datenbank zuzugreifen, in der eine oder mehrere der nachfolgend aufgelisteten Daten hinterlegt sind: Referenzdarstellungen für verschiedene Zahnradgeometrien; Daten zur zahnradspezifischen Benennung einer fotografischen Aufnahme und/oder einer Referenzdarstellung, wie eine Seriennummer, Zahnradbezeichnung, Verzahnungsdaten oder dergleichen; eine Dokumentenvorlage oder mehrere Dokumentenvorlagen zum Generieren von Protokollen aus den fotografischen Aufnahmen von Tragbildern und zahnradspezifische Protokolle, die aus der Dokumentenvorlage oder den Dokumentenvorlagen generiert worden sind.

Das Softwareprogrammprodukt kann einen Bediener des handgeführten elektronischen Geräts daher anhand der Datenbank unterstützen, in dem Referenzdarstellungen, Daten zur zahnradspezifischen Benennung und Dokumentenvorlagen zum Generieren von Protokollen unmittelbar in dem Softwareprogrammprodukt aufrufbar sind. So können z.B. Protokolle erstellt werden, indem fotografischen Aufnahmen von Tragbildern eine Seriennummer oder Zahnradbezeichnung hinzugefügt werden. Derartige Seriennummern oder Zahnradbezeichnungen können z.B. in einer Auswahlliste des Softwareprogrammprodukts verfügbar sein.

Alternativ oder ergänzend kann vorgesehen sein, dass als Teil der fotografischen Dokumentation ein Scannen eines zahnradspezifischen, maschinenlesbaren Codes, wie eines QR-Codes, eines Barcodes oder dergleichen, zur Identifikation der Verzahnung erfolgt, wobei das Softwareprogrammprodukt einen Code-Scanner aufweist, und wobei durch Scannen des zahnradspezifischen, maschinenlesbaren Codes zahnradspezifische Daten aus der Datenbank abgerufen werden, insbesondere, dass der zahnradspezifische, maschinenlesbare Codes auf einem Monitor einer Verzahnmaschine oder eines Prüfstands angezeigt wird.

Der Code-Scanner kann auf die Kamera des handgeführten elektronischen Geräts zugreifen. So kann der zahnradspezifische, maschinenlesbare Code in einfacher Weise mittels des elektronischen Geräts erfasst werden.

Dem zahnradspezifischen, maschinenlesbaren Code können verschiedene Daten zugeordnet sein, die in der Datenbank hinterlegt sind. So kann das Scannen des zahnradspezifischen, maschinenlesbaren Codes das Aufrufen einer zahnradspezifischen Referenzdarstellung auslösen, wobei einer in der Folge erstellen fotografischen Aufnahme eines Tragbildes automatisiert zahnradspezifische Daten zugeordnet werden und die fotografische Aufnahme einem Protokoll hinzugefügt wird. Der Bediener muss aufgrund der Datenbankverknüpfung daher keine fehleranfälligen manuellen Eingaben tätigen, sondern kann allein durch das Scannen des zahnradspezifischen, maschinenlesbaren Codes eine korrekte fotografische Dokumentation und Protokollierung auslösen.

Mit anderen Worten kann daher vorgesehen sein, dass infolge des Scannens des zahnradspezifischen, maschinenlesbaren Codes eine zahnradspezifische Referenzdarstellung aus der Datenbank abgerufen wird und/oder einem zahnradspezifischen Protokoll, das mindestens eine fotografische Aufnahme eines Tragbilds enthält, zahnradspezifische Daten hinzugefügt werden.

Es kann vorgesehen sein, dass zahnradspezifische Daten einer Bilddatei der jeweiligen fotografischen Aufnahmen von Tragbildern als Metadaten hinzugefügt werden, so dass die jeweilige Bilddatei selbst, auch ohne das Vorliegen eines Protokolls, anhand der Metadaten eindeutig zugeordnet werden kann.

Ein jeweiliges Protokoll kann z.B. als PDF-Datei oder dergleichen in der Datenbank abgelegt werden.

Es kann vorgesehen sein, dass dem zahnradspezifischen, maschinenlesbaren Code Soll-Daten der Geometrie zugeordnet sind, wobei anhand dieser Soll-Daten infolge des Scannens des zahnradspezifischen, maschinenlesbaren Codes eine Referenzdarstellung generiert wird.

Gemäß einer Ausgestaltung des Verfahrens kann vorgesehen sein, dass während des Ausrichtens und vor einem Auslösen der Kamera vordefinierte Parameter der Kamera, wie Belichtungsparameter und/oder Zoomeinstellungen oder dergleichen, aufgerufen werden, insbesondere, dass diese vordefinierten Parameter mit der Referenzdarstellung verknüpft sind, so dass mit dem Aufrufen der Referenzdarstellung auch die vordefinierten Parameter für die Kamera geladen werden.

Es kann vorgesehen sein, dass vor der fotografischen Dokumentation eines Zahnrads, für das noch keine Referenzdarstellung vorliegt, das Erzeugen einer oder mehrerer Referenzdarstellungen erfolgt.

Gemäß einer Ausgestaltung des Verfahrens kann vorgesehen sein, dass ein automatisiertes Auslösen der Kamera erfolgt, sofern eine Überdeckung der Referenzdarstellung mit dem zu dokumentierenden Zahnrad eine vorgegebene Genauigkeit erreicht hat.

Erfindungsgemäß wird eine Vorrichtung angegeben, eingerichtet zur fotografischen Dokumentation eines Tragbilds einer oder mehrerer Zahnflanken eines Zahnrads, wobei die Vorrichtung ein handgeführtes, elektronischen Geräts ist, wie ein Smartphone, ein Tablet oder dergleichen, wobei das handgeführte, elektronische Geräts eine Kamera und ein Display als elektronischen Sucher der Kamera aufweist, wobei die Vorrichtung dazu eingerichtet ist, während eines Ausrichtens und vor einem Auslösen der Kamera einem mittels des Displays dargestellten Live-Sucherbilds der Kamera eine Referenzdarstellung zumindest eines Ausschnitts des zu dokumentierenden Zahnrads zu überlagern, um ein wiederholgenaues, handgeführtes Ausrichten der Kamera relativ zum zu dokumentierenden zu ermöglichen.

Die Vorrichtung kann dazu eingerichtet sein, die fotografische Dokumentation mithilfe eines Softwareprogrammprodukts durchzuführen, das auf die Kamera und das Display zugreift, wobei das Softwareprogrammprodukt auf dem elektronischen Gerät ausgeführt wird, oder webbasiert in einem Browser des elektronischen Geräts aufgerufen wird.

Das Softwareprogrammprodukt kann dazu eingerichtet sein, auf eine Datenbank zuzugreifen, in der eine oder mehrere der nachfolgend aufgelisteten Daten hinterlegt sind: Referenzdarstellungen für verschiedene Zahnradgeometrien; Daten zur Benennung einer fotografischen Aufnahme und/oder einer Referenzdarstellung, wie eine Seriennummer, Zahnradbezeichnung, Verzahnungsdaten oder dergleichen; eine Dokumentenvorlage oder mehrere Dokumentenvorlagen zum Generieren von Protokollen aus den fotografischen Aufnahmen von Tragbildern und zahnradspezifische Protokolle, die aus der Dokumentenvorlage oder den Dokumentenvorlagen generiert worden sind.

Nachfolgend wird die Erfindung anhand einer Ausführungsbeispiele darstellenden Zeichnung näher erläutert. Es zeigen jeweils schematisch:
- Fig. 1A: ein Smartphone in einer Frontansicht;
- Fig. 1B: das Smartphone aus Fig. 1A in einer Rückansicht;
- Fig. 2: eine Kegelradpaarung in einem Axialschnitt;
- Fig. 3: ein Tellerrad in einer perspektivischen Ansicht;
- Fig. 4: ein Erstellen einer Referenzaufnahme eines Tragbilds eines Kegelrads;
- Fig. 5: ein Erstellen einer Referenzdarstellung aus der Referenzaufnahme gemäß Fig. 5;
- Fig. 6: die Referenzdarstellung in Form einer Referenzgrafik;
- Fig. 7: das Smartphone aus Fig. 1A mit der Referenzgrafik vor einem Ausrichten und Positionieren;
- Fig. 8: das Smartphone aus Fig. 1A. im ausgerichteten und positionierten Zustand;
- Fig. 9: ein Protokoll einer Dokumentation von Tragbildern;
- Fig. 10: Verfahrensschritt eines erfindungsgemäßen Verfahrens.

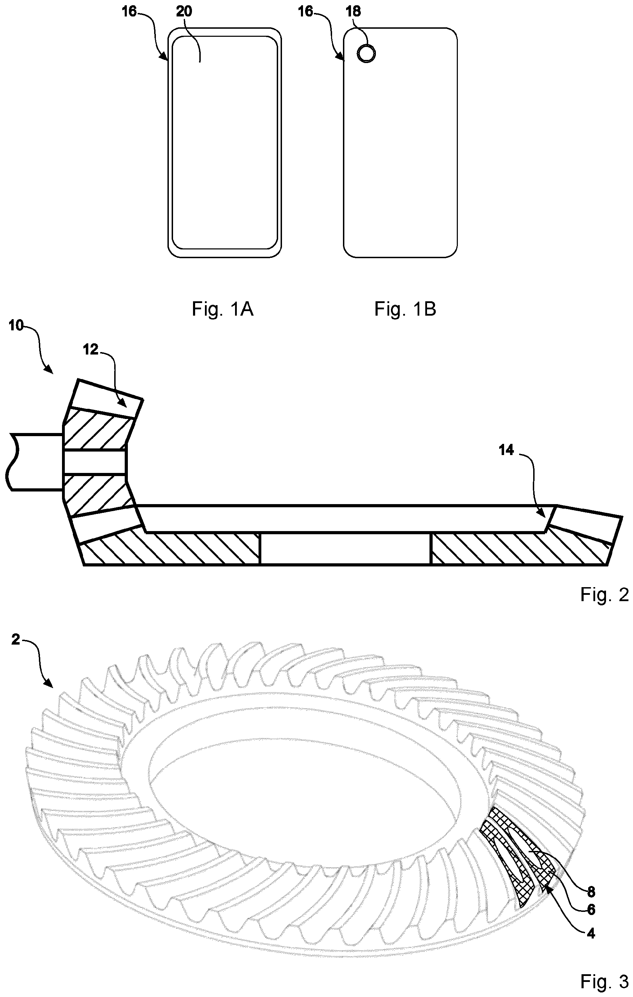

Erfindungsgemäß erfolgt zunächst ein Bereitstellen eines Zahnrads 2, wie z.B. des in Fig. 3 dargestellten Kegelrads.

Auf Zahnflanken 4 des Zahnrads 2 ist eine Substanz 6 zum Visualisieren eines Tragbilds 8 vorhanden - und zwar vorliegend Tuschierpaste. Es versteht sich, dass alle Zahnflanken 4 des Zahnrads 2 mit Tuschierpaste 6 versehen sind, wobei zur Vereinfachung der Darstellung lediglich zwei Zahnflanken 4 mit Tuschierpaste 6 und einem sichtbaren Tragbild 8 gezeigt sind.

Die Tuschierpaste 6 ist in bekannter Weise infolge eines Abwälzens des Zahnrads 2 mit einem Gegenrad teilweise abgetragen und/oder verdrängt worden, so dass das Tragbild 8 visualisiert ist. Fig. 2 zeigt exemplarisch und schematisch eine Kegelradpaarung 10 im Axialschnitt, mit einem Ritzel 12 und einem Tellerrad 14, wobei das Ritzel 12 z.B. ein solches Gegenrad 12 für das Tellerrad 2 aus Fig. 3 sein kann.

Das Prinzip der Visualisierung eines Tragbilds 8 mittels Tuschierpaste 6 ist im einleitend genannten Stand der Technik beschrieben und insgesamt hinlänglich bekannt.

In einem nächsten Schritt erfolgt eine fotografische Dokumentation des Tragbilds 8 einer oder mehrerer Zahnflanken 4.

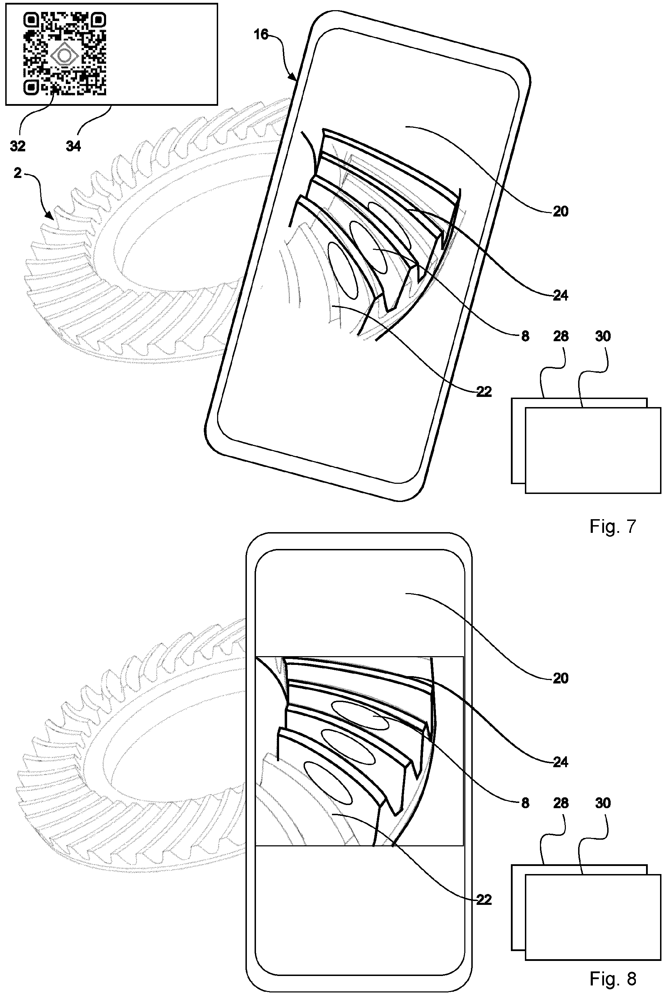

Hierzu erfolgt ein Ausrichten eines handgeführten elektronischen Geräts 16 (Fig. 7, Fig. 8) relativ zum zu dokumentierenden Tragbild 8 durch einen Bediener. Die weiterhin am Zahnrad 2 vorhandene Tuschierpaste ist zur Verbesserung der Übersichtlichkeit nur in Fig. 3 dargestellt. Es gilt, dass alle Zeichnungen, die ein Tragbild 8 zeigen, mit Tuschierpaste versehene Zahnflanken betreffen.

Das handgeführte, elektronische Gerät 16 ist vorliegend ein Smartphone. Das Smartphone 16 hat eine Kamera 18 und ein Display 20 als elektronischen Sucher der Kamera 18. D.h. das Display 20 zeigt bei aktivierter Kamera 18 ein Live-Sucherbild des aktuell von der Kamera 18 erfassten Bildes an.

Während des Ausrichtens der Kamera 18 bzw. des Smartphones 16 relativ zum zu dokumentierenden Tragbild 8 und vor einem Auslösen der Kamera 18 wird einem mittels des Displays 20 dargestellten Live-Sucherbilds 22 der Kamera 18 eine Referenzdarstellung 24 zumindest eines Ausschnitts des Zahnrads 2 überlagert, um für dem Bediener ein wiederholgenaues, handgeführtes Ausrichten der Kamera 18 relativ zum Zahnrad 2 zu ermöglichen.

Die Referenzdarstellung 24 ist vorliegend mit größerer Strichstärke gezeigt als das Live-Sucherbild 22 der Kamera 18. Die Referenzdarstellung 24 ist eine Referenzgrafik in Form von Konturen, die aus einer Referenzaufnahme, d.h. einer Referenzfotografie eines baugleichen Tellerrads abgeleitet worden sind.

Wie in Fig. 7 dargestellt, befindet sich das Smartphone 16 zu Beginn des Ausrichtens nicht in der korrekten Position und Orientierung relativ zum Zahnrad 2, da das Live-Sucherbild 22 der Kamera 18, welches den aktuell von der Kamera 18 erfassten Ausschnitt des Zahnrads 2 zeigt, nicht deckungsgleich mit der Referenzgrafik 24 ist.

Ein Bediener, der das Smartphone 16 hält, kann das Smartphone 16 nunmehr derart an das Zahnrad 2 annähern und relativ zum Zahnrad 2 schwenken, dass das Live-Sucherbild 22 einen Ausschnitt des Zahnrads 2 zeigt, der im Wesentlichen deckungsgleich mit der Referenzgrafik 24 ist. Dieser ausgerichtete Zustand ist in Fig. 8 dargestellt.

Es erfolgt nunmehr ein Auslösen der Kamera 18 durch den Bediener, um eine fotografische Aufnahme 26 des Tragbilds 8 im ausgerichteten Zustand gemäß Fig. 8 zu erzeugen.

Die fotografische Dokumentation kann durch den Bediener mithilfe eines Softwareprogrammprodukts 28 durchgeführt werden, das auf die Kamera 18 und das Display 20 zugreift. Das Softwareprogrammprodukt 28 wird auf dem handgeführten elektronischen Gerät 16 ausgeführt oder wird webbasiert in einem Browser des handgeführten elektronischen Geräts 16 aufgerufen.

Das Softwareprogrammprodukt 28 ist dazu eingerichtet, auf eine Datenbank 30 zuzugreifen, in der eine oder mehrere der nachfolgend aufgelisteten Daten hinterlegt sind: Referenzdarstellungen 24 für verschiedene Zahnradgeometrien; Daten zur zahnradspezifischen Benennung einer fotografischen Aufnahme und/oder einer Referenzdarstellung, wie eine Seriennummer, Zahnradbezeichnung, Verzahnungsdaten oder dergleichen; eine Dokumentenvorlage oder mehrere Dokumentenvorlagen zum Generieren von Protokollen 36 aus den fotografischen Aufnahmen 26 von Tragbildern 8 und zahnradspezifische Protokolle, die aus der Dokumentenvorlage oder den Dokumentenvorlagen generiert worden sind.

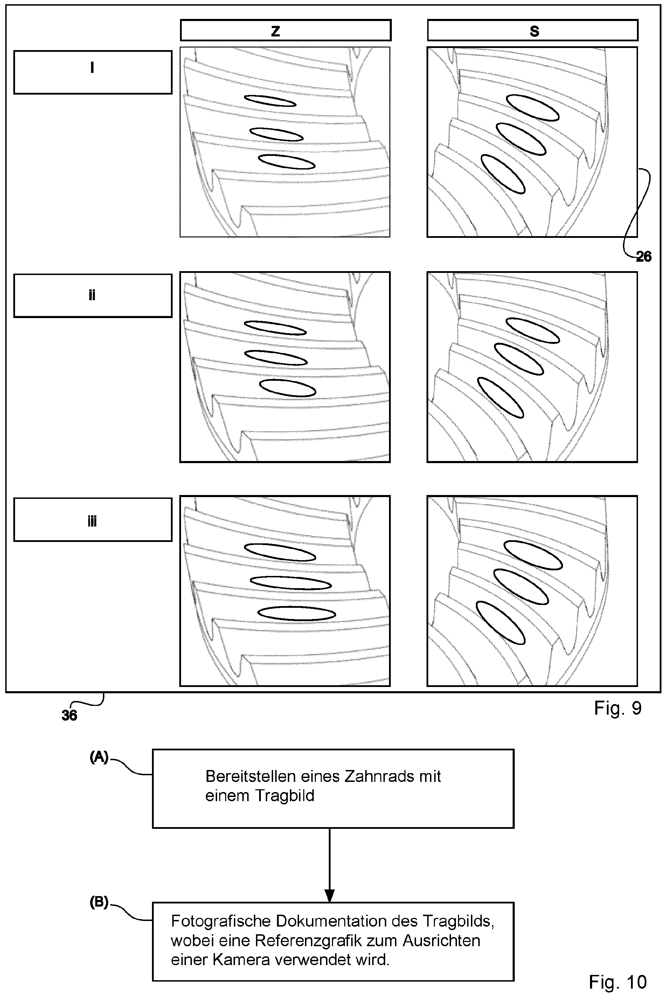

Fig. 9 zeigt exemplarisch ein solches Protokoll 36, dass in einer ersten Spalte Z Tragbilder von Zugflanken des Zahnrads 2 und in einer zweiten Spalte S Tragbilder von Schubflanken des Zahnrads 2 nach verschiedenen Feinbearbeitungsschritten i, ii, iii erfasst.

Um für ein zu dokumentierendes Zahnrad sofort die korrekte Referenzdarstellung aufrufen zu können und dem Protokoll zahnradspezifische Benennungen aus der Datenbank 30 hinzuzufügen, kann als Teil der fotografischen Dokumentation ein Scannen eines zahnradspezifischen, maschinenlesbaren QR-Codes 32 zur Identifikation der Verzahnung 2 erfolgen.

Das Softwareprogrammprodukt 28 weist einen QR-Code-Scanner auf, der auf die Kamera 18 zugreift, um den QR-Code 32 zu erfassen.

Durch das Scannen des zahnradspezifischen, maschinenlesbaren QR-Codes 32 werden somit zahnradspezifische Daten aus der Datenbank 30 abgerufen. Der zahnradspezifische, maschinenlesbare QR-Code 32 kann auf einem Monitor 34 einer Verzahnmaschine oder eines Prüfstands angezeigt werden.

Während des Ausrichtens und vor einem Auslösen der Kamera 18 können vordefinierte Parameter der Kamera 18, wie Belichtungsparameter und/oder Zoomeinstellungen oder dergleichen, aufgerufen werden, wobei diese vordefinierten Parameter mit der Referenzdarstellung 24 verknüpft sein können, so dass mit dem Aufrufen der Referenzdarstellung 24 auch die vordefinierten Parameter für die Kamera 18 geladen werden.

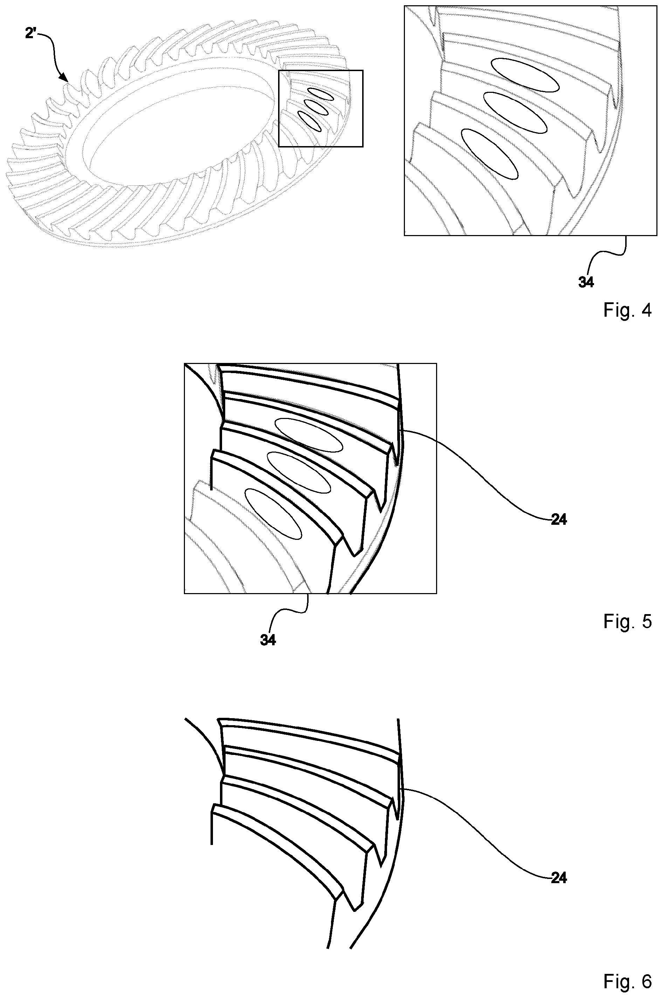

Vor der fotografischen Dokumentation des Zahnrads 2 kann das Erzeugen der Referenzdarstellung 24 erfolgt sein. Hierzu kann zunächst eine Referenzaufnahme 34, d.h. einer Referenzfotografie eines zum Tellerrad 2 baugleichen Tellerrads 2' erstellt worden sein (Fig. 4).

Aus dieser Referenzfotografie 34 ist mittels des Softwareprogrammprodukts 28 durch eine Kantenerkennung die Referenzgrafik 24 in Form von Konturen abgeleitet worden (Fig. 5, Fig. 6).

Das Smartphone 16 ist demnach vorliegend eine Vorrichtung, eingerichtet zur fotografischen Dokumentation des Tragbilds 8 der Zahnflanken 4 des Zahnrads 2.

Das Smartphone 16 ist dazu eingerichtet, während eines Ausrichtens und vor einem Auslösen der Kamera 18 einem mittels des Displays 20 dargestellten Live-Sucherbilds 22 der Kamera 18 eine Referenzdarstellung 24 zumindest eines Ausschnitts des zu dokumentierenden Zahnrads 2 zu überlagern, um ein wiederholgenaues, handgeführtes Ausrichten der Kamera 18 relativ zum zu dokumentierenden Zahnrad 2 zu ermöglichen.

Das erfindungsgemäße Verfahren hat demnach die Verfahrensschritte (A) Bereitstellen eines Zahnrads mit einem Tragbild und (B) Fotografische Dokumentation des Tragbilds, wobei eine Referenzgrafik zum Ausrichten einer Kamera verwendet wird.

## Patentansprüche

1. Verfahren, mit den Verfahrensschritten,
- Bereitstellen eines Zahnrads (2),
- wobei auf Zahnflanken (4) des Zahnrads (2) eine Substanz (6) zum Visualisieren eines Tragbilds (8) vorhanden ist, wie Tragbildlack, Tuschierpaste oder dergleichen, und
- wobei die Substanz (6) infolge eines Abwälzens des Zahnrads (2) mit einem Gegenrad teilweise abgetragen und/oder verdrängt worden ist, so dass das Tragbild (8) visualisiert ist;
- Fotografische Dokumentation des Tragbilds (8) einer oder mehrerer Zahnflanken (4), durch
- Ausrichten eines handgeführten elektronischen Geräts (16), wie eines Smartphones, eines Tablets oder dergleichen, das eine Kamera (18) und ein Display (20) als elektronischen Sucher der Kamera (18) aufweist, relativ zum jeweils zu dokumentierenden Tragbild (8), wobei während des Ausrichtens und vor einem Auslösen der Kamera (18) einem mittels des Displays (20) dargestellten Live-Sucherbilds (22) der Kamera (18) eine Referenzdarstellung (24) zumindest eines Ausschnitts des Zahnrads (2) überlagert wird, um ein wiederholgenaues, handgeführtes Ausrichten der Kamera (18) relativ zum Zahnrad (2) zu ermöglichen, und
- Auslösen der Kamera (18), um eine fotografische Aufnahme (26) des Tragbilds (8) zu erzeugen.

2. Verfahren nach Anspruch 1,
**dadurch gekennzeichnet, dass**
- die Referenzdarstellung (24) eine teiltransparente Wiedergabe einer fotografischen Aufnahme eines baugleichen Zahnrads aufweist und/oder
- die Referenzdarstellung (24) mindestens eine aus einer fotografischen Aufnahme eines baugleichen Zahnrads abgeleitete Referenzgrafik aufweist, wie eine Kontur, ein Linienmodell, Eckpunkte oder dergleichen und/oder
- die Referenzdarstellung (24) mindestens eine aus Soll-Daten des Zahnrads (2) abgeleitete Referenzgrafik aufweist, wie eine Kontur, ein Linienmodell, Eckpunkte oder dergleichen.

3. Verfahren nach Anspruch 1 oder Anspruch 2,
**dadurch gekennzeichnet, dass**
die fotografische Dokumentation mithilfe eines Softwareprogrammprodukts (28) durchgeführt wird, das auf die Kamera (18) und das Display (210) zugreift, wobei das Softwareprogrammprodukt (28) auf dem handgeführten elektronischen Gerät (16) ausgeführt wird oder webbasiert in einem Browser des handgeführten elektronischen Geräts (16) aufgerufen wird, wobei das Softwareprogrammprodukt dazu eingerichtet ist, auf eine Datenbank (30) zuzugreifen, in der eine oder mehrere der nachfolgend aufgelisteten Daten hinterlegt sind:
- Referenzdarstellungen für verschiedene Zahnradgeometrien;
- Daten zur zahnradspezifischen Benennung einer fotografischen Aufnahme und/oder einer Referenzdarstellung, wie eine Seriennummer, Zahnradbezeichnung, Verzahnungsdaten oder dergleichen;
- eine Dokumentenvorlage oder mehrere Dokumentenvorlagen zum Generieren von Protokollen aus den fotografischen Aufnahmen von Tragbildern und zahnradspezifische Protokolle, die aus der Dokumentenvorlage oder den Dokumentenvorlagen generiert worden sind.

4. Verfahren nach Anspruch 3,
**dadurch gekennzeichnet, dass**
als Teil der fotografischen Dokumentation ein Scannen eines zahnradspezifischen, maschinenlesbaren Codes (32), wie eines QR-Codes, eines Barcodes oder dergleichen, zur Identifikation der Verzahnung erfolgt,
wobei das Softwareprogrammprodukt (28) einen Code-Scanner aufweist,
und wobei durch Scannen des zahnradspezifischen, maschinenlesbaren Codes (32) zahnradspezifische Daten aus der Datenbank (30) abgerufen werden, insbesondere, dass der zahnradspezifische, maschinenlesbare Code auf einem Monitor (34) einer Verzahnmaschine oder eines Prüfstands angezeigt wird.

5. Verfahren nach Anspruch 3 und Anspruch 4,
**dadurch gekennzeichnet, dass**
infolge des Scannens des zahnradspezifischen, maschinenlesbaren Codes (32) eine zahnradspezifische Referenzdarstellung (24) aus der Datenbank (30) abgerufen wird und/oder einem zahnradspezifischen Protokoll (36), das mindestens eine fotografische Aufnahme (26) eines Tragbilds (8) enthält, zahnradspezifische Daten hinzugefügt werden.

6. Verfahren nach einem der voranstehenden Ansprüche,
**dadurch gekennzeichnet, dass**
während des Ausrichtens und vor einem Auslösen der Kamera (18) vordefinierte Parameter der Kamera (18), wie Belichtungsparameter und/oder Zoomeinstellungen oder dergleichen, aufgerufen werden, insbesondere, dass diese vordefinierten Parameter mit der Referenzdarstellung (24) verknüpft sind, so dass mit dem Aufrufen der Referenzdarstellung (24) auch die vordefinierten Parameter für die Kamera (18) geladen werden.

7. Verfahren nach einem der voranstehenden Ansprüche,
**dadurch gekennzeichnet, dass**
vor der fotografischen Dokumentation eines Zahnrads, für das noch keine Referenzdarstellung vorliegt, das Erzeugen einer oder mehrerer Referenzdarstellungen (24) erfolgt.

8. Verfahren nach einem der voranstehenden Ansprüche,
**dadurch gekennzeichnet, dass**
ein automatisiertes Auslösen der Kamera (18) erfolgt, sofern eine Überdeckung der Referenzdarstellung mit dem zu dokumentierenden Zahnrad eine vorgegebene Genauigkeit erreicht hat.

9. Vorrichtung,
eingerichtet zur fotografische Dokumentation eines Tragbilds (8) einer oder mehrerer Zahnflanken (4) eines Zahnrads (2), wobei die Vorrichtung (16) ein handgeführtes, elektronisches Geräts ist, wie ein Smartphone, ein Tablet oder dergleichen, wobei das handgeführte, elektronische Geräts eine Kamera (18) und ein Display (20) als elektronischen Sucher der Kamera (18) aufweist, wobei die Vorrichtung (16) dazu eingerichtet ist, während eines Ausrichtens und vor einem Auslösen der Kamera (18) einem mittels des Displays (20) dargestellten Live-Sucherbilds (22) der Kamera (18) eine Referenzdarstellung (24) zumindest eines Ausschnitts des zu dokumentierenden Zahnrads (2) zu überlagern, um ein wiederholgenaues, handgeführtes Ausrichten der Kamera (18) relativ zum zu dokumentierenden Zahnrad (2) zu ermöglichen.

10. Vorrichtung nach Anspruch 9,
**dadurch gekennzeichnet, dass**
die Vorrichtung (16) dazu eingerichtet ist, die fotografische Dokumentation mithilfe eines Softwareprogrammprodukts (28) durchzuführen, das auf die Kamera (18) und das Display (20) zugreift, wobei das Softwareprogrammprodukt (28) auf dem elektronischen Gerät (16) ausgeführt wird oder webbasiert in einem Browser des elektronischen Geräts (16) aufgerufen wird, wobei das Softwareprogrammprodukt (28) dazu eingerichtet ist, auf eine Datenbank (30) zuzugreifen, in der eine oder mehrere der nachfolgend aufgelisteten Daten hinterlegt sind:
- Referenzdarstellungen für verschiedene Zahnradgeometrien;
- Daten zur Benennung einer fotografischen Aufnahme und/oder einer Referenzdarstellung, wie eine Seriennummer, Zahnradbezeichnung, Verzahnungsdaten oder dergleichen;
- eine Dokumentenvorlage oder mehrere Dokumentenvorlagen zum Generieren von Protokollen aus den fotografischen Aufnahmen von Tragbildern und
- zahnradspezifische Protokolle, die aus der Dokumentenvorlage oder den Dokumentenvorlagen generiert worden sind.
